# EUROPEAN PATENT APPLICATION

(11) **EP 3 871 754 A1**
(43) Date of publication of application: **01.09.2021**
(21) Application number: 20188542.3
(22) Date of filing: 30.07.2020
(51) Int. Cl.: B01D 53/04

(54) **PLANT AND METHOD FOR TREATING AN AERIFORM EFFLUENT**

(30) Priority: 26.02.2020 IT 202000003961
(71) Applicant: Brofind S.p.a., 20159 Milano (IT)
(72) Inventor: FLOCCO, Elio, 20159 Milano (IT)
(74) Representative: Cammareri, Emanuele

(57) **Abstract**

The present invention concerns a plant and a method for the treatment of aeriform effluent in which, in particular, the plant includes a delivery piping (50) configured to transport aeriform effluent from a production station (200), and a first purification apparatus (10), arranged along the delivery piping (50), and comprising at least one adsorber device (2) within which at least one filter element (3), configured to carry out an initial aeriform effluent adsoption operation, and is characterized by the fact that it includes a second purification apparatus (20), placed along the delivery piping (50), downstream of the first purification apparatus (10), and including a roto-concentrator (30) configured to perform at least one second adsorption operation of the aeriform effluent fluid and at least one desorption operation of contaminants accumulated on the roto-concentrator (30) during the second adsorption operation; and a return pipeline (60) configured so as to connect the roto-concentrator (30) to an inlet portion (14) of the delivery piping (50).

## Description

### TECHNICAL FIELD

The present invention refers to the field of treatment of aeriform fluids coming from industrial waste. In particular, the invention refers to a plant and method for the treatment of an aeriform effluent and the recovery of contaminants in it.

### STATE OF THE ART

In the field of treatment of aeriform fluids coming from waste from industrial processing, different types of processes are known for the removal of organic and/or inorganic contaminants present in the fluids themselves, which is usually necessary before they are released into the atmosphere. These processes differ from each other according to the methodology used to carry out the treatment which reclaims the fluid from unwanted substances present in it.

The term "effluent" means a fluid in which organic-based and/or inorganic-based contaminants are present.

The phrase "treatment of an aeriform effluent" means a process to remove contaminants from an aeriform fluid coming from industrial processing.

With particular regard to industrial sectors that include processes using solvents, such as the painting, chemical-pharmaceutical or printing industry (magazines, catalogues, flexible packaging, adhesive tapes, etc.), the vapours emitted by these solvents (also called VOCs, or Volatile Organic Compounds) and present in the effluent from the processes carried out, are extremely harmful and can therefore have a significant environmental impact.

In order to comply with the constraints provided for in the relevant regulation governing the emission of these substances into the atmosphere, it is therefore necessary to provide appropriate emission treatment plants, downstream of the processes that use them.

The most common treatment plants currently used for the removal of contaminants of a generic nature present in aeriform effluents coming from industrial waste, are the so-called RTO (Regenerative Thermal Oxidizer) which generally include a combustion unit - able to carry out the oxidation of gaseous pollutants present in the effluent, inside a high-temperature combustion chamber - and a unit for the heat recovery, using ceramic material.

These plants allow the abatement of polluting compounds thanks to the high temperatures used, also ensuring a good energy efficiency, but have the essential characteristic of dissolving the substances present in the treated effluent, due to thermal oxidation to which they are subject, and therefore they have the limit not to ensure the recovery of any elements of interest, for reuse.

With particular reference to the printing (magazines, catalogues, packaging), coating, film lamination, adhesive tapes or artificial leather sectors, the reagents used in the processes usually comprise large quantities of organic solvents; this is due to the fact that the printing process, whether rotogravure or flexography, is carried out at very high speeds, and it is therefore necessary to use solvents which have the capacity to evaporate quickly (such as ethyl acetate or mixtures of alcohols and ethyl acetate, toluene, hexane), so as to meet the quality standards for these types of products.

It follows that in this type of processes, the quantity of solvents in the air flow to be treated is very high, so it may be advantageous to provide a plant that allows the recovery of the solvents themselves, as well as their re-introduction into the production process, although the investment costs are certainly high.

Solvent and/or contaminant recovery plants, which can be used in contexts with such requirements, generally use the technique of adsorption by means of filter media, through which the aeriform effluent is passed so that the molecules of the contaminants are retained within appropriate structures in such media.

A widely used adsorption technique is one that involves filtration using activated carbon or zeolites or equivalent adsorbent material; according to this purification process, the effluent is passed through a bed of activated carbon so that the pores of the carbon adsorb the contaminants. The treated aeriform flow is then conveyed to a chimney through which it is released into the atmosphere. The adsorption phase continues through such filtering media until saturation of the same is reached or, in the presence of specific concentration limits of contaminants that may be present in the aeriform flow released into the atmosphere, until the limits are reached. Following this, the filtration media must be regenerated allowing the solvent/contaminant to be recovered in the liquid phase, making it available again for further use.

This technique, however, does not have an extremely high efficiency in the abatement of contaminants, as is increasingly required by the new regulations that regulate the emissions of these substances resulting from production processes; it follows that a percentage of contaminants remain in the flow that is released into the atmosphere. However, this is undesirable.

In such cases it is therefore necessary at least to further treat the contaminants present in the effluent before the effluent is released into the atmosphere, so that the concentration values of the pollutants are contained below the new and stricter limits, if any, laid down in the regulations.

As said, over the years, these limits have become more and more strict, reflecting on the number and size of filter media of newly designed recovery plants, thus making the management of plants based on this technology increasingly complex and economically disadvantageous. The activated carbon recovery plants, in fact, are characterized by high costs of the components used and the operations carried out in the continuous regeneration treatments of the filtration elements, necessary to maintain a high level of efficiency of the effluent purification process.

The need is therefore felt for an efficient method and plant whose implementation and management is cost-effective.

### PURPOSES AND SUMMARY OF THE INVENTION

The purpose of this invention is to overcome the drawbacks of known art.

In particular, it is the purpose of this invention to present a method and a plant for the treatment of an aeriform effluent, coming from industrial waste, that allow efficient purification of the effluent and recovery of the contaminants present in the treated fluid.

A further purpose of the present invention is to present a plant for the treatment of an aeriform effluent that can be easily configured and sized according to the type of effluent to be treated, as well as being overall cheaper than plants of known art.

Another purpose of the present invention is to present a plant that has a lower environmental impact than plants of known art.

In addition, the purpose of this invention is to present a method and a plant for the treatment of aeriform effluent that will optimize the time needed to purify the effluent, while generating a high-quality purified fluid at the outlet of the plant.

It is also the purpose of the present invention to present a plant and a method for the treatment of an aeriform effluent, which allows an easy planning and regulation of the abatement of contaminants.

Finally, purpose of this invention is to present a plant for the treatment of an aeriform effluent, which can be adapted to the chemical-physical characteristics of the effluent to be purified, both at the design stage and when it is in operation, for example during the effluent purification process.

These and other purposes of this invention are achieved by a method and plant incorporating the characteristics of the attached claims, which form an integral part of this description.

The present invention concerns an effluent treatment plant, comprising a delivery piping configured to transport aeriform effluent from a production station and a first purification apparatus along said supply piping and including at least one adsorber device, within which at least one filter element, configured to carry out an initial adsorption of the aeriform effluent. The plant shall also include a second purification apparatus along the delivery piping downstream of the first purification apparatus, and including a roto-concentrator configured to carry out at least one second adsorption operation of the aeriform effluent fluid and at least one desorption operation of contaminants accumulated on the roto-concentrator during the second adsorption operation. The plant further includes a return pipeline configured to connect the roto-concentrator to an inlet portion of the delivery piping.

This solution makes it possible to build a plant in which the effluent purification treatment is highly efficient and at the same time the construction and management of the plant involves a low cost.

The Applicant has, in fact, decided to overcome the limits of traditional adsorption plants, which require a large number of filter media of considerable dimensions in order to be able to reduce the concentration of contaminants below certain thresholds, by fitting a roto-concentrator downstream of the adsorbing device.

Such a roto-concentrator is in fact able to generate two flows, of which a first flow at lowered concentration, which can therefore be released into the environment, and a second flow containing a concentration of contaminants increased to such a level that it can be treated and recovered again through the adsorbing device.

In this way it is easily possible to release into the environment flows characterized by very low concentrations of contaminants, recirculating the recovered contaminants in order to reuse them.

In accordance with a further aspect, the invention concerns a method for the treatment of an effluent including conveying an aeriform effluent stream in an initial purification apparatus, comprising at least one adsorbing device, within which at least one filter element is placed. The method also provides for an initial adsorption operation on said aeriform effluent, through at least one filter element.

The method further involves conveying the aeriform effluent, leaving the first purification apparatus, to a second purification apparatus, including a roto-concentrator, and carrying out at least one second adsorption operation of the aeriform effluent and at least one desorption operation through this roto-concentrator.

The method also involves the recirculation of the aeriform effluent coming out of the desorption operation to the first purification apparatus.

According to this solution, it is possible to achieve an improved treatment of an aeriform effluent, as it is highly purified, while at the same time providing an advantageous recovery of contaminants present in the treated effluent.

The present invention, in at least one of the above aspects, may have at least one of the following preferred characteristics, considered individually or in combination with any of the other preferred characteristics described.

The plant further includes a recirculation pipeline configured to connect a heater device downstream of the roto-concentrator, the recirculation piping conveying a portion of the outgoing flow from the roto-concentrator to the heater device and redirecting a heated flow from the heater device to the roto-concentrator.

According to this configuration, it is possible to adjust the temperature of the effluent to be returned to the roto-concentrator to carry out a desorption phase and optimize the processes carried out there accordingly.

In one embodiment, the plant includes a filtration station before the roto-concentrator device, including a number of filters designed to carry out mechanical filtration of the aeriform effluent before it is introduced into said second purification apparatus.

According to this configuration, further purification of the aeriform effluent is carried out before it enters the roto-concentrator, further improving the efficiency of the processes carried out subsequently, inside the roto-concentrator itself.

Preferably, the plant includes at least one first heat exchanger, positioned along the delivery piping and placed before the first purification device, configured to cool the aeriform effluent passing through it to a temperature between 30°C and 40°C.

In this way, optimal conditions are created for the adsorption process to be carried out efficiently. Preferably, the system includes at least a second heat exchanger placed along the return pipeline and configured to condense the moisture present in the aeriform effluent passing through it.

According to this configuration, the effluent is rendered in an optimal state to be purified again, further improving the efficiency of the aeriform effluent treatment process.

Preferably, the system shall include at least one first ventilation device configured to aspirate the aeriform effluent from the production station and convey it to this delivery piping.

Preferably, the plant includes at least one second ventilation device located downstream of at least one initial purification apparatus and configured to convey the flow of effluent to the roto-concentrator.

Preferably, the system shall include at least one high temperature fluid emission device configured to periodically regenerate at least one filter element.

In this way, the efficiency of the treatment process carried out in the first purification plant is advantageously increased, as well as a convenient recovery of contaminants.

Preferably, carrying out at least one second adsorption operation and at least one effluent desorption operation shall consist of dividing the flow of aeriform effluent entering the roto-concentrator into a first and a second portion and introducing the first portion of said aeriform effluent into a first area of the roto-concentrator to carry out said second contaminant adsorption operation in said first area and then conveying the second portion of the flow leaving said first area to a heater device, and the first portion in an outlet duct in connection with a chimney.

In this way, it is advantageous to subject the aeriform effluent to further purification treatment, in order to further reduce the concentration of contaminants present in it, limiting emissions into the atmosphere to a minimum.

Preferably, performing at least one effluent desorption operation includes introducing the second portion into a second area of the roto-concentrator in order to cool that area of the roto-concentrator and return the second portion of aeriform effluent from the heater to the roto-concentrator, through a third zone of the roto-concentrator, in order to carry out a desorption operation of the contaminants accumulated on the roto-concentrator during this previous second adsorption operation, obtaining at the exit of the roto-concentrator a portion of aeriform effluent containing the contaminants resulting from the said desorption operation.

In this way, a portion of the effluent with low volume but high concentration of contaminants is made available, which can be advantageously recirculated to a further purification process, further abating the contaminants present in the effluent released into the atmosphere.

Preferably, the first and second portions of effluent are weighted against each other at a ratio of about 1/40 to about 1/4.

According to this selection, an optimization of the adsorption and desorption operations carried out by the roto-concentrator is advantageously achieved.

In one embodiment, the method includes conveying the aeriform effluent leaving the first purification apparatus towards a filtration station, in front of the roto-concentrator, and comprising a number of filters designed to achieve mechanical filtration of the aeriform effluent.

Further features and purposes of the present invention will be clearer in the following description.

### BRIEF DESCRIPTION OF THE DRAWINGS

The invention will be described below with reference to some examples, provided for explanatory and non-exhaustive purposes, and illustrated in the attached drawings.
Figure 1 shows a diagram of a plant for the treatment of an aeriform effluent according to an embodiment of the present invention;
Figure 2 shows a diagram of a plant in figure 1, according to an alternative embodiment of the present invention;
Figure 3 shows a diagram of a plant in figure 1, according to a further and alternative embodiment of the present invention;
Figure 4 is a graph representing the concentration of contaminants leaving an adsorbing device depending on time;
and Figure 5 is a flow chart of a method for the treatment of an aeriform effluent according to an embodiment of the present invention.

### DETAILED DESCRIPTION OF THE INVENTION

While the invention is subject to various modifications and alternative constructions, some preferred embodiments are shown in the drawings and will be described below in detail. It must be understood, however, that there is no intention to limit the invention to the specific embodiment illustrated, but, on the contrary, the invention is intended to cover all modifications, alternative constructions, and equivalent constructions falling within the scope of the invention as defined in the claims.

The use of "e.g.", "etc.", "or" indicates non-exclusive alternatives without limitation unless otherwise indicated. The use of "include" means "include, but not limited to" unless otherwise indicated.

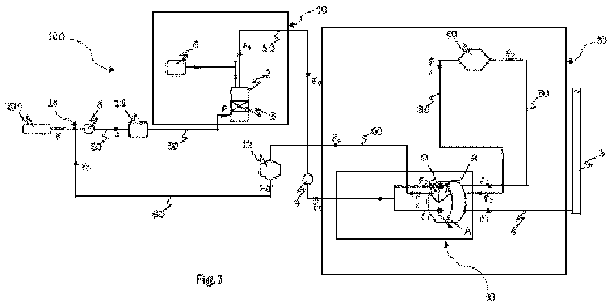

With reference to Figure 1, a plant 100 for the treatment of an aeriform effluent according to the present invention is shown, which receives a flow of aeriform effluent F produced by the processes carried out by a generic production station 200, in which contaminating elements are present in a concentration that can vary between 200 mg/Nm3 and 20,000 mg/Nm3 (milligrams per normal cubic meter, i.e. under conditions of atmospheric pressure and temperature of 0°C), depending on the type of processing carried out.

Plant 100 includes a delivery piping 50, configured to transport of aeriform effluent F from the production plant 200 to the various purification devices in the plant which are affected in sequence by the flow of effluent.

More specifically, plant 100 comprises a first purification apparatus, arranged along the said delivery piping 50 and served by them, comprising at least one adsorbing device 2, within which at least one filter element 3 is fitted. The purification apparatus 10 can be suitably configured both according to the flow rate of effluent to be reclaimed and to the concentration values of contaminants present in the effluent F from the processing station 200, and according to the limit values of contaminants present in the effluent to be released into the atmosphere, which you wish to keep. Such purification apparatus 10 may, for example, involve the use of several adsorbing devices 2 placed in parallel, each of which in turn may have one or more filter elements 3. The number of filter elements 3 used in each adsorbing device 2, as well as the amount of adsorbent substance contained in them, is determined during the design phase of the plant, based on various process parameters, such as the value of the effluent flow rates that can be purified, the concentration values of contaminants present in the effluent F, or even based on the desired purification efficiency.

In a preferred embodiment, the filter element 3 consists of a bed of activated carbon through which the effluent F is passed to release some of the contaminants present there by adsorption. It is however possible to foresee the use of materials as an alternative to activated carbon, provided they have similar adsorption capacity.

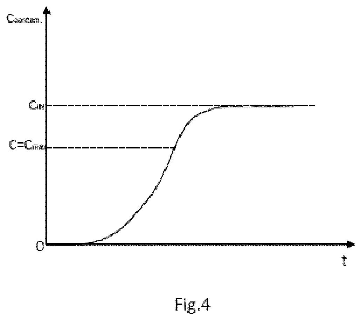

As shown in Figure 4, the concentration of contaminants leaving the adsorbing device 2 increases depending on time until it reaches a value equal to the input value, meaning that the filter element has reached saturation and is no longer able to retain further contaminants.

In order to avoid an undesirable emission of polluting substances into the atmosphere, therefore, the system shall be equipped with at least one emission device 6 of a high temperature fluid configured to carry out periodic regeneration of the filter element 3. Preferably, this regeneration is carried out when the saturation of the filter element has reached a limit value to guarantee a target level of VOC emissions, which has been set during the planning phase of the plant; during the design phase it is in fact advantageous to configure the plant 100 according to the maximum concentration of contaminants in the effluent to be reached at the outlet of the filter element 3.

In particular, the techniques for the regeneration of activated carbon are substantially divided into two different types, according to the nature of the contaminant present in the aeriform effluent to be treated. A first technique, used in case there are solvents/contaminants not soluble in water (e.g. hexane, toluene), consists in regeneration with overheated steam, while a second technique, used in case the contaminants present in effluent F are soluble in water (e.g. ethyl acetate, ethanol), uses inert gas at high temperature. In both cases, the fluid used to carry out the regeneration of activated carbon shall be supplied to the emission device 6 which, as mentioned above, is configured to carry out such regeneration of filter element 3, allowing the recovery of the contaminant in liquid phase and purification of the carbon of the saturated filter element 3, making it available again.

Plant 100 also includes at least a first ventilation device 8, configured to aspirate aeriform effluent F from production station 200 and convey it to the delivery piping 50, so that it can flow from station 200 to the first purification device 10. Preferably this ventilation device 8 consists of at least one fan.

The system 100 includes at least one initial heat exchanger 11 located along the delivery piping 50 and placed before the first purification device 10, configured to cool the aeriform effluent F passing through it up to a temperature between 30°C and 40°C.

This heat exchanger, as said, provides for the cooling of the aeriform effluent F to a temperature suitable for the adsorption process, i.e. preferably not exceeding about 40°C, even more preferably about 35°C.

Downstream of the first purification apparatus 10, along the delivery piping 50, at least a second ventilation device 9 shall be provided, which is configured to convey the effluent outflow F0 from the first purification apparatus 10 to a second purification apparatus 20 which includes a roto-concentrator 30.

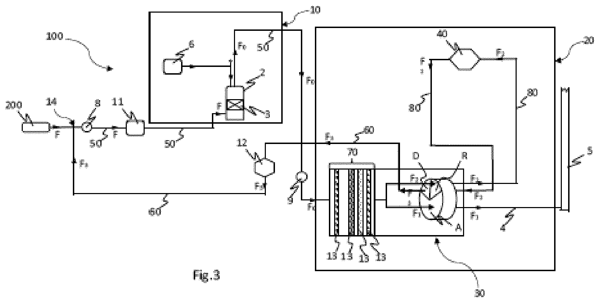

According to a preferred configuration shown in figure 3, the system 100 can include a filtration station 70, placed before the roto-concentrator 30. The filtration station 70 includes a number of filters 13 configured to carry out a mechanical filtration of the effluent F0 leaving the first purification apparatus 10, in a phase prior to its introduction into the roto-concentrator 30.

In this way, the aeriform effluent F0, at the inlet of the roto-concentrator 30, flows through said plurality of filters 13 and any particulate matter of various sizes are retained there avoiding that the adsorbent material present in the roto-concentrator is obstructed even partially, slowing down or at the limit hindering the flow of the treated effluent inside the roto-concentrator itself.

With particular reference to the structure of the roto-concentrator 30, it has a cylindrical structure with a circular cross-section, also called "wheel", generally made of ceramic honeycomb fibre, whose bases are covered with a suitable material with adsorbing capacity. In a preferred embodiment of the present invention the roto-concentrator 30 is made by deposition of zeolite; in other possible embodiments the material covering this structure may be activated carbon.

The wheel is preferably divided into a first area A (adsorption area), a second area R (cooling area) and a third area D (desorption area) through which the aeriform effluent is passed. The dimensions of the wheel and therefore of these areas are generally chosen in relation to the substances to be reclaimed and the flow rate of the effluent fluid to be purified.

Downstream of the roto-concentrator 30, there is a heater 40, served by a recirculation pipeline 80, which connects it to the roto-concentrator 30. These recirculation pipes 80 are configured to convey a portion of the flow, leaving the roto-concentrator 30, to heater 40 and to re-introduce this portion of the flow, the temperature of which has been increased by passing through heater device 40 itself, back into roto-concentrator 30, at the afore-mentioned third area D.

According to a preferred configuration, heater 40 consists of a heat exchanger, preferably diathermic oil heat exchanger. According to alternative designs, heater 40 consists of an electric heater, or a fuel or steam burner.

At the inlet of the roto-concentrator 30 there is also an outlet conduit 4, configured to channel part of the aeriform effluent flow out of the roto-concentrator into a chimney 5 through which the effluent is released into the atmosphere.

In addition, plan 100 includes a return pipeline 60 configured to connect the roto-concentrator 30 to an inlet portion 14 of the delivery piping 50.

According to a preferred embodiment, plant 100 includes at least a second heat exchanger 12 placed along the return pipeline 60 and configured to condense the moisture present in the aeriform effluent passing through it.

In a further embodiment of plant according to this invention, detectors (not shown in the figures) of the concentration of contaminants are provided. The detectors can be placed, for example, at the inlet of the plant on the delivery pipes 50, and/or downstream of adsorber 2 or purification apparatuses 10 and 20, as well as a control unit connected to these detectors. The control unit is designed to receive the measured concentration values from the detectors and process them to adapt various process parameters accordingly, such as the flow rate of the aeriform effluent entering the plant or the number of purification cycles to which this effluent must be subject. According to this configuration, the plant can be advantageously adapted to the chemical-physical characteristics of the effluent to be purified, even during the effluent purification process.

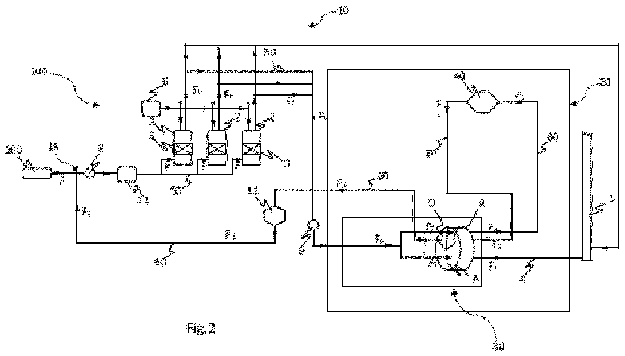

In the preferred embodiment shown in figure 2, the purification apparatus 10 includes four adsorbers 2, this number being taken purely as an example but, in any case it is greater than two and preferably between three and five depending on the sizing needs in the design phase of the plant.

Near the outlet ducts of the adsorbers 2 here are detectors (not shown) of the concentration of the contaminants, configured to send measured concentration data to a control unit, which is programmed to analyse and compare these measured concentration data and select one or more flows F0 leaving the different adsorber devices 2 and send them to the second purification apparatus 20 for further treatment.

In this way it is also possible to set the control unit so that it selects one or more outgoing flow(s) F0 from the relative adsorber(s), the one(s) where the concentration of pollutants is higher, to convey it(them) to the second purification apparatus 20, while the remaining flows are conveyed directly to chimney 5.

This configuration makes it possible to size the flow rates of the first purification system 10 and the second purification system 20 independently, increasing the flexibility of plant management 100. In addition, this configuration leads to an optimization of both investment and energy costs.

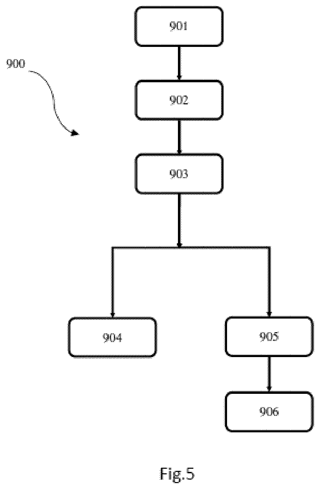

Having described the structure of the plant 100 we describe a method 900 for the treatment of an aeriform effluent, according to an embodiment of the present invention schematically shown in figure 5.

Method 900 according to the present invention foresees to convey (block 901) a flow of aeriform effluent F, coming from the production station 200, into the first purification apparatus 10, including at least one adsorber device 2, through the supply pipeline 50. In a preferred form of implementation of method 900, aeriform effluent F flows through the first heat exchanger 11, placed along the delivery piping 50 and placed before the first purification device 10, which is designed to lower the temperature of the effluent.

In this phase, the aeriform effluent F flows between said production station and said first purification apparatus 10 thanks to the first ventilation device 8.

Method 900 therefore foresees to carry out (block 902) a first adsorption operation on this aeriform effluent, through at least one filter element 3 present in the adsorber device 2. At the end of this adsorption operation, the aeriform effluent leaving F0 from the first purification apparatus 10 is partially purified and still has contaminating elements in a concentration between about 50 mg/Nm3 and about 200 mg/Nm3 (milligrams per normal cubic metre, i.e. under conditions of atmospheric pressure and temperature of 0°C).

According to a preferred embodiment of method 900 based on the invention, periodic regeneration of at least one filter element 3 by at least one high temperature fluid emission device 6 shall be carried out. This regeneration, in addition to increasing the efficiency of the treatment process carried out in the first purification apparatus, allows advantageous recovery of the contaminants deposited on the filter element 3.

Method 900 therefore foresees to convey (block 903) the aeriform effluent F0, leaving the first purification apparatus 10, to the second purification apparatus 20, including, as said, the roto-concentrator 30. In this way, it is advantageous to subject the aeriform effluent F0 to further purification treatment, to further reduce the concentration of contaminants in it, limiting emissions into the atmosphere to a minimum.

In an optional embodiment, method 900 provides for conveying, by means of the second ventilation device 9, the flow of effluent F0 to a filtering station 70 in front of the roto-concentrator and comprising a number of filters designed to achieve mechanical filtration of the aeriform effluent.

Method 900 then involves entering the aeriform effluent flow into the roto-concentrator 30 to carry out (block 904) a second adsorption operation. In particular, the flow of aeriform effluent F0 entering the roto-concentrator 30 is divided into a first portion F1 and a second portion F2.

The first portion F1 is then fed into the roto-concentrator 30 near the first area A of the wheel so that, flowing through its structure, a second operation of adsorption of the contaminants present in this first area A is carried out. Once crossed the wheel of the roto-concentrator 30, the first portion F1 is conveyed into the outlet duct 4 in connection with the chimney 5 allowing its release into the atmosphere.

Thanks to the second adsorption operation carried out by means of the roto-concentrator, the aeriform effluent subject to the treatment according to the invention is further purified, and it is thus advantageous to obtain a flow of aeriform effluent released into the atmosphere with a concentration of contaminants not exceeding 20 mg/Nm3.

According to this method 900, the second portion F2 is instead fed into the second area R of the wheel of the roto-concentrator 30, in order to carry out a cooling operation of this area R of the roto-concentrator itself.

In addition, method 900 requires at least one desorption operation (block 905) to be carried out by means of the said roto-concentrator 30.

More in detail, the second portion F2 of aeriform effluent flow is fed into the roto-concentrator 30 near the second area R of the wheel and, after passing through it, is conveyed, through the recirculation pipeline 80, to the heater 40 which, as said, is configured to increase its temperature.

The second portion of fluid F2 heated in this way, is conveyed back to the roto-concentrator 30 by means of the recirculation pipeline 80, and fed back into it near the third area D of the wheel, in the opposite direction to the entering flow.

As it flows again, but at increased temperature, through the structure of the wheel of the roto-concentrator, the portion of fluid F2 carries out the desorption operation of the contaminants accumulated on the roto-concentrator 30 during the previous second adsorption operation; therefore, at the outlet of the roto-concentrator 30, a portion of aeriform effluent F3 is obtained containing the contaminants deriving from this desorption operation in high concentration (4,000-18,000 mg/Nm3) and whose temperature is usually between about 50° and 60 °C.

Preferably, heater 40 increases the temperature of the second portion of fluid F2 up to a value between 120°C and 220°C, this value being established depending on flow rate of the second portion of fluid F2 (which in turn depends on the flow rate of the aeriform effluent from production station 200). In this way the efficiency of the desorption operation is advantageously optimized.

According to a preferred embodiment of method 900 according to the invention, the first and second portions F1 and F2 of aeriform effluent are weighted against each other at a ratio of about 1/40 to about 1/4. According to this range of values, an optimization of the adsorption and desorption operations carried out by the roto-concentrator is advantageously achieved 30.

The method 900 therefore foresees to recirculate (block 906) the portion F3 of aeriform effluent, leaving said desorption operation, towards said first purification apparatus 10. Preferably, the portion F3 is transported via the return pipeline 60 and, via the inlet portion 14, fed into the supply pipeline line 50 so that this portion F3 can be fed back into a further purification cycle via the first purification apparatus 10.

According to the sizing shown above, with regard to the flow rates of aeriform effluent fed into the roto-concentrator 30, a substantially reduced flow rate of the F3 portion is advantageous compared to that of the aeriform effluent initially fed into the plant; the concentration of contaminants in this F3 portion will therefore be high, resulting in a high efficiency of the recovery process of the contaminants once this F3 portion has undergone a desorption operation.

The invention thus conceived is subject to numerous modifications and variations, all of which fall within the scope of protection defined by the attached claims.

## Claims

1. Plant (100) for treating an aeriform effluent comprising:
- a line of delivery conduits (50) configured to transport the aeriform effluent, coming from a manufacturing station (200); and
- a first purification apparatus (10), arranged along said line of delivery conduits (50), and comprising at least one adsorber device (2), within which at least one filtering element (3) is arranged, configured to perform a first adsorption of the aeriform effluent; **characterized in that** it comprises:
- a second purification apparatus (20), arranged along the line of delivery conduits (50), located downstream the first purification apparatus (10), and comprising a roto-concentrator device (30) configured to perform at least a second adsorption of the aeriform effluent fluid and at least one desorption of contaminants collected on the roto-concentrator (30) during the second adsorption; and
- a return line of conduits (60) configured so as to connect the roto-concentrator device (30) to an input portion (14) of the line of delivery conduits (50).

2. Plant (100) according to claim 1, comprising a line of re-circulation conduits (80) configured to connect a heater device (40) downstream of the roto-concentrator device (30), the re-circulation conduits (80) being apt to convey a portion of flow output the roto-concentrator device (30) to the heater device (40), and to re-conveying a heated flow output the heater device (40) to the roto-concentrator device (30).

3. Plant (100) according to claim 1 or 2, comprising a filtration station (70) placed before the roto-concentrator device (30), comprising a plurality of filters (13) apt to carrying out a mechanical filtration of the aeriform effluent, prior to lead it in said second purification apparatus (20).

4. Plant (100) according to any one of the preceding claims, comprising at least a first heat exchanger (11), placed along the line of delivery conduits (50), before the first purification device (10), and configured to cool the aeriform effluent passing through thereof, at a temperature between 30 ° C and 40 ° C.

5. Plant (100) according to any one of the preceding claims, comprising at least a second heat exchanger (12) placed along the return line of conduits (60) and configured to condense the humidity remaining in the aeriform effluent passing through thereof.

6. Plant (100) according to any one of the preceding claims, comprising:
- at least a first ventilation device (8) configured to suck the aeriform effluent from the manufacturing station (200) and convey it to said line of delivery conduits (50); and at least a second ventilation device (9) positioned downstream the at least one first purification apparatus (10) and configured to convey the flow of effluent towards said roto-concentrator device (30).

7. Method (900) for treatment of an aeriform effluent comprising: conveying (901) a flow of aeriform effluent (F) into a first purification apparatus (10), comprising at least one adsorber device (2), within which at least one filtering element (3) is arranged,
- performing (902) a first adsorption of said aeriform effluent (F), through said at least one filtering element (3), obtaining an output aeriform effluent (F0) from said first purification apparatus (10);
- conveying (903) the aeriform effluent (F0), towards a second purification apparatus (20), comprising a roto-concentrator device (30);
- performing (904) at least a second adsorption of the aeriform effluent (F0) and perform (905) at least one desorption through said roto-concentrator device (30); and - recirculating (906) the aeriform effluent output said desorption, towards said first purification apparatus (10).

8. Method (900) according to claim 7, wherein said performing at least a second effluent adsorption and at least one desorption comprises:
- subdividing the flow of aeriform effluent (F0) entering the roto-concentrator device (30), into a first portion (F1) and a second portion (F2);
- introducing the first portion (F1) of said aeriform effluent into a first zone (A) of the roto-concentrator device (30) so as to perform said second contaminant adsorption in said first zone (A);
- introducing the second portion (F2) in a second zone (R) of the roto-concentrator device (30) so as to perform a cooling operation of this zone (R) of the roto- concentrator device;
- conveying the second flow portion (F2) output said zone (R) towards a heating device (40), and the first portion (F1) in an outlet conduit (4) in connection with a chimney (5);
- reintroducing the second portion (F2) of aeriform effluent output the heating device (40) into the roto-concentrator device (30), through a third zone (D) of the roto-concentrator device (30), so as to carry out a desorption of contaminants collected on the roto-concentrator device (30) during said previous second adsorption, obtaining at the output of the roto-concentrator device (30) a portion of aeriform effluent (F3) containing the contaminants deriving from said desorption operation.

9. Method (900) according to the previous claim, wherein said first portion (F1) and second portion (F2) of effluent are weighted with respect to each other according to a ratio between about 1/40 and about 1/4.

10. Method (900) according to any one of claims 7 to 9, comprising the step of conveying the aeriform effluent output the first purification apparatus towards a filtration station (70), placed before the roto-concentrator device (30), and comprising a plurality of filters (13) apt to perform a mechanical filtration of the aeriform effluent.
